# EUROPEAN PATENT APPLICATION

(11) **EP 4 033 408 A1**
(43) Date of publication of application: **27.07.2022**
(21) Application number: 21305078.4
(22) Date of filing: 22.01.2021
(51) Int. Cl.: G06K 19/077

(54) **ELECTRONIC MODULE WITH INDICATION DEVICE**

(71) Applicant: Thales DIS France SA, 92190 Meudon (FR)
(72) Inventor: OTTOBON, Stéphane, 13881 GEMENOS Cedex (FR); DOSSETTO, Lucile, 13881 GEMENOS Cedex (FR); LELOUP, Laurent, 13881 GEMENOS Cedex (FR)
(74) Representative: Milharo, Emilien

(57) **Abstract**

An electronic module (1) for a data carrier (2) defines an extension direction (E) and comprises at least one substrate (3), the substrate (3) preferably being dielectric, and at least one indication device (4). The indication device (4) is configured to communicate with at least one integrated circuit chip (5). The indication device (4) is configured to receive at least one state signal being indicative of at least one state. The indication device (4) is further configured to yield at least one indication signal (6) in response to the state signal, the at least one indication signal (6) being indicative of the at least one state.

## Description

### TECHNICAL FIELD

The present invention relates to an electronic module for a data carrier according to claim 1, a data carrier comprising or consisting of such an electronic module according to claim 12, a security document comprising or consisting of such a data carrier according to claim 14, and a method of producing an electronic module according to claim 15.

### PRIOR ART

Data carriers comprising electronic modules such as smart cards are well-known in the art and are used in a variety of applications. For example, data carriers as banking cards allowing a dual interface card payment (contact and contactless) are interesting for a user because it is easier and faster than inserting a contact card, entering a PIN code and waiting for acceptance. However, it is very limited because there is only a limited amount of payment in order to keep security since there is no PIN code required for such payments.

Dual-interface biometric cards are also known and have the advantage of allowing quick and easy payment transactions while providing an enhanced security because of the biometric authentications performed by the biometric cards. One of the drawbacks associated with such biometric cards is that if the user places his card over the contactless reader without properly touching a fingerprint sensor or the like, which is used for the biometric authentication, the payment is not made, wherein the user does not know the reasons for the failed transaction. In fact, he does not know if the authentication was unsuccessful or if there are payment transaction problems.

Existing solutions from the prior art suggest data carriers comprising indication devices that indicate a successful or unsuccessful authentication. For example, it is known to manufacture data carriers such as smart cards that have an indicator light such as an LED in the card body. EP1861813, for instance, describes a process for manufacturing an electronic module comprising at least one integrated circuit chip connected to conductive tracks of an insulating support and at least one light-emitting diode connected or intended to be connected to an antenna. The process includes a step of coating at least the integrated circuit and the light-emitting diode (LED) with an insulating and translucent resin. WO2017102110 A1 describes a process for manufacturing a device with a radio frequency module and a light indicator. The antenna of the module is separate from that of the radio frequency transponder.

These data carriers are associated with several drawbacks. For example, biometric cards are complex and expensive to manufacture and may present reliability problems in the electrical connection of the electronic module. In fact, in order to drive an indication device such as an LED being located outside of the electronic module, it is necessary to have a higher number of external electrical interconnections that render the data carrier as well as its manufacturing complex. Furthermore, the accommodation of an indication device such as an LED in the card body of the data carrier by means of a hot lamination process or hot rolling process is very difficult as the indication device is typically mounted on a flexible printed substrate, e.g. with a large overhang in the flexible substrate (or card body), to allow ACF connection of the electronic module. Moreover, the thickness of the LED complicates the lamination process. In addition, the provision of an indication device such as an LED in the card body by means of the hot rolling process also results in mechanical reliability problems.

### SUMMARY OF THE INVENTION

It is an object of the present invention to provide an electronic module for a data carrier that overcomes the drawbacks of the prior art. In particular, it is an object to provide an electronic module for a data carrier that has a simplified construction and at the same time is reliable and durable.

This object is achieved with an electronic module according to claim 1. In particular, an electronic module for a data carrier is provided, wherein the electronic module defines an extension direction and comprises at least one substrate and at least one indication device. The substrate is preferably dielectric and the indication device is configured to communicate with at least one integrated circuit chip. The indication device is configured to receive at least one state signal being indicative of at least one state, and the indication device is further configured to yield at least one indication signal in response to the state signal. The at least one indication signal is indicative of the at least one state.

That is to say, the electronic module according to the invention comprises at least one indication device. In other words, the at least one indication device is not arranged outside of the electronic module and in a card body of the data carrier, for example, but inside the electronic module. This arrangement simplifies the construction while enhancing a reliability and durability. For instance, a number of external interconnection pads or the like of the electronic module that are needed for a connection of the electronic module is reduced as compared to the solutions of the state of the art comprising the indication device in the card body. Furthermore, the difficulties associated with the manufacturing as described above can be dispensed with.

The extension direction is understood as a direction extending from a top side of the electronic module towards a bottom side of the electronic module. In a use state of the electronic module, i.e. if the indication device is used to indicate the indication signal to a user, the top side faces the user. If the electronic module is used in or as a data carrier such as a smart card, see further below, the top side is provided on a contact side of the electronic module and the bottom side is provided on a bonding side of the electronic module. Hence, the extension direction can also be seen as a direction extending from a contact side of the electronic module towards a bonding side of the electronic module.

The integrated circuit chip can be arranged in the electronic module. Alternatively, the integrated circuit chip can be arranged outside of the electronic module. If two or more integrated circuit chips are provided, it is conceivable that one or more of these integrated circuit chips are arranged in the electronic module and/or that one or more of these integrated circuit chips are arranged outside of the electronic module.

As mentioned, the indication device is in communication with at least one integrated circuit chip. Said communication could be provided by means of a wired connection and/or by means of a wireless connection being established between the indication device and said at least one integrated circuit. Examples of a wired connection are electronic connections such as electrical tracks or metallic pads and the like which electrically connect the indication device with the integrated circuit. Examples of a wireless connection are antennas being provided on the indication device and the integrated circuit chip.

The integrated circuit chip can also be referred to as a die, i.e. a chip sawn (or singulated) from a semiconductor-wafer, in particular a silicon wafer, and wherein an integrated circuit is arranged on the die.

The integrated circuit chip preferably is a secure element chip. The secure element chip is well-known in the art and corresponds to a microprocessor that can store sensitive data, e.g. confidential or cryptographic data, and can furthermore store or run secure applications such as payments. It acts as a vault, protecting any applications and data being stored in the secure from malware attacks or the like. In other words, the secure element chip can be seen as a tamper-resistant chip, used to store the most sensitive information (e.g. banking applications & banking credentials, fingerprint reference template of enrolled user). All communications from an external reader are preferably sent to the secure element chip (acting as "Master") and the secure element chip will dispatch some tasks to a microcontroller (acting as "Slave") or the like, e.g. to acquire image, to perform fingerprint extraction, to switch on/off the LED. In other words, the microcontroller can receive its instructions from the secure element chip and will then dispatch instructions to other devices if needed (e.g. to a detection device such as a sensor if an image acquisition is required). Hence, the electronic module preferably comprises or is in communication with a microcontroller, see also below. That is, the indication device is particularly preferably in communication with the integrated circuit chip, in particular the secure element chip, via a microprocessor or microcontroller unit MCU. For instance, it is conceivable to connect the indication device with the microcontroller, and to connect the microcontroller to the secure element chip. It is furthermore preferred that the microcontroller is in connection with at least one detection device such as a fingerprint sensor, i.e. a device that is configured to detect at least one detection signal, wherein the at least one state signal and/or the at least one indication signal is based on said at least one detection signal, see further below. However, other integrated circuit chips known in the art such as a microcontroller chip are likewise conceivable.

The indication device can be an optical device and the indication signal can be an optical signal. The indication device preferably is a light emitting diode (LED). It is likewise conceivable that the indication device is an acoustic device and that the indication signal is an acoustic signal. It is also conceivable that the indication device is a haptic device and that the indication signal is a haptic signal. It should be noted that the electronic module according to the invention can comprise only one indication device or two or more indication devices, wherein said two or more indication devices can be the same or different from one another. Any statements made herein with regard to one indication device likewise apply to the case wherein the electronic module comprises two or more indication devices and vice versa.

The state signal can be an authentication signal that indicates the existence or absence of an authentication. The authentication preferably corresponds to an authentication of a user of the electronic module and particularly preferably is a biometric authentication of the user. It is likewise conceivable that the state signal is an operating signal that indicates a correct or incorrect operation. The operation preferably corresponds to an operation of the electronic module by a user of the electronic module. That is, the state signal preferably indicates if the user of the electronic module correctly uses the electronic module. It is likewise conceivable that the state signal is a function signal that indicates the existence or absence of a functionality. Said functionality preferably is a functionality of the electronic module and/or a functionality of a procedure initiated or executed by the electronic module such as a payment and/or a functionality of another device being in connection with the electronic module. It should be noted here as well that the indication device can be configured to receive only one or two more of said state signals, wherein said two or more state signals can be the same or different from one another. Consequently, the indication device can be configured to yield only one indication signal or two more indication signals.

It is however likewise conceivable to provide two or more indication devices that are indicative of two or more distinct states. For example, two indications devices that differ in their indications signals could be used, wherein one indication device is assigned to one state and the other indication device is assigned to a different state. The indication devices could be light emitting diodes that emit light of different color and the states could correspond to a successful and an unsuccessful payment transaction. The different indication signals, i.e. the different colors, make the functionality of the payment transaction readily apparent to a user.

The indication device is preferably arranged after the substrate with respect to the extension direction. That is, when seen from the top side of the electronic module towards the bottom side of the electronic module the indication device preferably follows the substrate, i.e. the indication device is preferably arranged below the substrate. Again in other words, the indication device is preferably arranged in a region of the bottom side of the electronic module or in the region of the bonding side of the electronic module or on a backside of the electronic module. It is however likewise conceivable that the indication device is comprised in the substrate, i.e. arranged within the substrate.

It is furthermore preferred that the indication device is configured to yield the indication signal along one or more yielding directions, wherein at least one yielding direction extends opposite to the extension direction. In other words, said at least one yielding direction extends from the bottom side of the electronic module towards the top side of the electronic module.

The substrate is preferably provided as a layer, particularly preferably as a dielectric layer. The layer is preferably arranged such, that it extends perpendicularly to the extension direction.

It is furthermore preferred that the substrate is at least partially transparent and/or at least partially translucent. In particular, since the indication device can be arranged after the substrate with respect to the extension direction or within the substrate it is preferred that the substrate allows at least part of the indication signal yielded by the indication device to reach from the indication device towards an outside. For example, if the indication device is an optical device such as a light emitting diode, it is preferred that the substrate is at least partially transmissive for the optical signal emitted from the optical device.

The substrate can comprise or consist of one or more epoxy compounds and/or of one or more polymers or mixtures or composites thereof. The substrate preferably is a composite material, particularly preferably a polymer matrix being reinforced with fibers. The fibers comprise or consist of glass. The polymer matrix preferably comprises or consists of one or more thermostable polymers such as polyethylene naphthalate (PEN) and/or polyethylene terephthalate (PET) and/or polyimide. Furthermore, the substrate can comprise one or more additives that are configured to change one or more optical properties of the substrate, the additives preferably being particles and/or fillers, particularly preferably phosphorous based particles and/or fillers. For example, in the event that the indication device corresponds to an optical device, the optical indication signals could interact with the additives such that the optical indication signals are modified. An interaction could correspond to an excitation of the additives by the indication signal, wherein a modified indication signal could comprise a wavelength being different from a wavelength of the indication signal exciting the additive.

The indication device is preferably in connection with the substrate. The indication device could be attached to the substrate, for example. To this end it is particularly preferred that the indication device is attached to a bottom side of the substrate, i.e. to said side of the substrate that is facing the bottom side of the electronic module.

The indication device could be provided as a chip which is in direct contact with the substrate, in particular directly connected to the substrate. It is however likewise conceivable that the indication device is provided as a surface mounded device (SMD).

For instance, and as mentioned above, the indication device could be an optical indication device. A preferred optical indication device being provided as a chip is an LED chip. The LED chip can be connected to the substrate, in particular to the bottom side of the substrate. A conceivable connection would be an attachment of the LED chip by means of a conductive die such as silver glue and as it is known in the art. It is furthermore conceivable that the LED chip is in connection with the top side of the substrate, in particular with one or more contact elements arranged thereon, see further below. Such a connection could be established by means of wire bonding as it is known in the art. As such it is preferred that the substrate comprises one or more vias, i.e. plated through holes (PTH), that enable an electrical linking of contact elements on the top side of the substrate with one or more metallic pads or the like that are arranged on the bottom side of the substrate and which are used for the wire bonding with the LED chip.

However, it is likewise conceivable that the optical indication device is provided as a surface mounted device, in particular as a Light Emitting Diode Surface Mounted Device (LED SMD). The LED SMD preferably corresponds to a packaged component comprising a die that is connected to a printed circuit board (PCB) or leadframe or the like and which furthermore preferably comprises a protective encapsulation mold. The indication device in the form of the surface mounted device is preferably connected to the substrate, in particular to landing pads on the bottom side of the substrate, by conductive material such as solder paste or silver glue and as it is known in the art. The landing pads can be seen as metalized areas on the substrate. To this end two arrangements of the optical indication device are conceivable. Namely, according to a first arrangement the optical indication device, in particular the LED, is provided with a standard mounting orientation, whereas in a second arrangement, the optical device, in particular the LED, is provided with a reverse mounting orientation. In the reverse mounting orientation, the LED is mounted upside down compared to the substrate. In other words, the LED is in an inverted position.

The electronic module can define a standard area. The indication device can be arranged within said standard area or outside of said standard area. For example, the indication device could be arranged laterally offset with respect to the standard area of the electronic module and with respect to a central axis extending centrally through the electronic module and parallel to the extension direction. In this case it is furthermore preferred that the electronic module comprises a protuberance or extension which protrudes or extends from the standard area, and wherein the indication device is arranged in said protuberance or extension. Various geometrical extensions of the standard area are conceivable. For example, the standard area could be of a rectangular or square shape, wherein the corners could be rounded. Such a standard area is common in electronic modules of data carriers such as banking cards or SIM cards. Various shapes of the protuberance or extension are likewise conceivable. For example, said protuberance or extension could be rectangular, circular, of an irregular shape, in the shape of a logo, etc. The protuberance or extension is preferably provided by the substrate, wherein the indication device is in electrical connection with the standard part of the electronic module, i.e. with said part of the electronic module that is comprised in the standard area. A conceivable electrical connection is established with metallized areas or pads on the substrate, and wherein these metallized areas or pads are in connection with the indication device and are furthermore linked or routed in the standard part of the electronic module so as to be connected to the integrated circuit chip of the electronic module. An arrangement of the indication device in the protuberance or extension has the advantage that more space within the electronic module can be used for other components of the electronic module, such as a microprocessor or microcontroller, see further below. Moreover, a further advantage lies in the fact that the protuberance or extension allows a removal of the indication device from an area that becomes covered in certain applications of the electronic module, for example when the electronic module is inserted into a reader. If the indication device is arranged in the standard area of the electronic module, which is inserted into the reader, the indication device would be hided.

The electronic module preferably further comprises at least one absorption element, wherein the absorption element is configured to at least partially absorb one or more parts of the indication signal yielded along one or more yielding directions that are different from an observation direction under which an observer observes the electronic module. The absorption element is preferably arranged after the indication device with respect to the extension direction and/or at least partially around the indication device. Additionally or alternatively the absorption element preferably comprises or consists of a black encapsulation and/or a black plastics. However, it is likewise conceivable that the electronic module does not comprise such an absorption element. Instead, a preferably transparent encapsulation element (see further below) or no encapsulation element at all could be provided.

That is to say, the absorption element is preferably arranged and configured such that it at least partially absorbs those parts of the indication signal that are yielded along an unwanted direction. For example, if the indication device is an optical device and the indication signal is an optical signal such as light, the absorption element absorbs light being emitted in directions that are different from an observation direction along which the user observes the electronic module. As a consequence, those parts of the indication signal that are yielded along the wanted direction, here along the observation direction, is enhanced or concentrated. It is particularly preferred that the absorption element is facing towards the bottom side of the electronic module or, if the electronic module is used as or in a data carrier, the absorption element is facing towards the bonding side.

Examples of a black encapsulation and/or of a black plastics is an epoxy resin with black fillers.

The electronic module preferably further comprises at least one diffusive element that is arranged before the indication device and/or after the indication device with respect to the extension direction and/or at least partially around the indication device. The diffusive element is preferably configured to diffuse the indication signal. It is furthermore preferred that the diffusive element comprises or consists of a UV transparent encapsulation. A conceivable UV transparent encapsulation comprises or consists of a thermoset resin such as an epoxy resin. This resin can be polymerized by irradiating UV radiation.

For example, if the indication device is an optical indication device such as an LED the diffusive element could be provided by means of an UV transparent resin that is placed on and around the LED on that side of the LED that faces towards the bottom side of the electronic module.

The electronic module preferably further comprises at least one reflection element such as a mirror or a white plate that is arranged before and/or after the indication device with respect to the extension direction and that is configured to reflect the indication signal along one or more directions extending opposite or essentially opposite to the extension direction.

Hence, the reflection element serves the purpose of reflecting parts of the indication signal that are yielded along an unwanted direction into the wanted directions. For example, if the indication device is an optical device such as an LED, the reflection element could be arranged after the LED with respect to the extension direction. In this case, light of the LED that is emitted along the extension direction, i.e. in an opposite direction than the observation direction along which an observer observes the electronic module, the reflection element will reflect said light, whereby the reflected light will be extending along a direction corresponding to the observation direction or at least being close to said observation direction. Broadly speaking, the reflection element serves the purpose of reflecting indication signals extending towards the bottom side of the electronic module so as to extend towards the top side of the electronic module. The reflection element particularly preferably faces towards the bottom side of the electronic module or, if the electronic module is used as or in a data carrier, the reflection element is facing towards the bonding side. However, depending on the type of reflection element it is likewise conceivable to arrange the reflection element at a different location. For example, if the reflection element is provided as a mirror said mirror could be placed before the indication device with respect to the extension direction, i.e. on a side of the electronic module that faces the observer such as on the top side or the contact side of the electronic module.

If a diffusive element is present, the reflection element could be arranged after the diffusive element with respect to the extension direction. For example, a diffusive element in the form of an encapsulation could be provided, and wherein the reflection element in the form of a mirror or white place is sticked on and by the resin forming the encapsulation. Other ways of attachment are likewise conceivable, for example, the reflection element could be attached by means of an adhesive or glue.

The electronic module preferably further comprising at least one contact element being configured to establish a contact with an external contacting device. The contact element preferably comprises or consists of one or more electrically conducting materials. Particularly preferably the contact element is copper with nickel and gold metallizations.

The contact element is preferably arranged before the substrate and/or before the indication device with respect to the extension direction. For example, the contact element could be arranged on the top surface of the substrate. In other words, the contact element is preferably arranged in a region of the top side of the electronic module, i.e. on the contact side of the electronic module. However, it is likewise preferred to arrange one or more contact elements on the bottom side of the substrate. It is particularly preferred to arrange one or more contact elements on the top side of the substrate and one or more contact elements on the bottom side of the substrate. In this case, the substrate can be seen as a double side film or tape or leadframe such as a thin and flexible printed circuit in reel (kind of PCB). The substrate particularly preferably corresponds to a double side dielectric film comprising plated conductive vias holes with contact elements such as metallizations on both sides, e.g. one or more contact elements being arranged on the top side of the substrate and one or more electrical contact elements being arranged on the bottom side of the substrate with some electrical tracks and connection areas. The substrate is preferably arranged between the contact element(s) and the indication device. A dielectric substrate is used in this case to maintain the contact elements together in the electronic module and to avoid electrical shortcut between the contact elements. In the case of a double side film where some metallic contacts can be arranged on the top side of the dielectric substrate and some metallic areas can be arranged on the bottom side of the dielectric substrate, the dielectric substrate is used to insulate the metallic contact on the top side and the metallic pads on the bottom side to not have them touching together and avoid electrical shortcut. The integrated circuit chip of the electronic module is preferably connected to one or more contact elements such as ISO contacts being arranged on the top side of the substrate and/or to one or more contact elements such as pads, i.e. electrical connection areas, being arranged on the bottom side of the substrate. The indication device is preferably mounted and connected on the bottom side of the substrate on one or more connection areas, which enables an electrical connection of the indication device to the integrated circuit chip such as to a microcontroller chip.

The contact element on the top side of the substrate such as metallic contact (copper) elements are preferably in connection with the secure element chip. In fact, the secure element chip can be arranged on the bottom side of the electronic module, i.e. on the bonding side and be wire bonded through blind holes in the dielectric substrate the metallic contact or by vias linking the contact to a metallic pad of the bonding side which is wire bonded with a pad of the chip. Since the secure element chip can comprise radio frequency pads it is furthermore preferred that the electronic module comprises one or more antennas that are preferably provided on the bonding side of the electronic module. However, if the electronic module is provided in a data carrier it is likewise preferred that one or more antennas are provided in the data carrier, such as in the card body of the data carrier. In this case it is furthermore preferred that one or more contact pads are provided on the bonding side of the electronic module, and wherein the antennas are connected to said contact pads. Further contact elements such as contact elements being configured to communicate with a detection device such as a fingerprint biometric module or the like, see further below. Said fingerprint biometric module or the like is preferably provided in a data carrier comprising the electronic module, see further below. Additionally or alternatively it is however likewise conceivable that at least one detection device is provided in and/or on the electronic module according to the invention. The at least one detection device is configured to detect at least one detection signal, wherein the at least one state signal and/or the at least one indication signal is based on said at least one detection signal. The at least one detection device thus preferably is in communication with the indication device, so that a state signal being retrieved from the detection signal can be communicated to the indication device.

The contact element preferably delimits or comprises at least one opening, and wherein the opening enables a passage of the indication signal yielded by the indication device. Said opening is particularly preferably provided in a contact element that is arranged on the top side of the substrate. It is furthermore preferred that the opening of the contact element and the indication device are arranged axial to each other. In other words, the opening of the contact element and the indication device are preferably arranged at a same location with respect to a direction extending perpendicularly to the extension direction. The opening allows the indication signal being yielded from the indication device such as light being emitted from an LED to reach through the contact element and towards an outside. The opening is preferably produced by etching into the contact element.

The electronic module can further comprise at least one modification element, and wherein the modification element is configured to modify the indication signal yielded by the indication device. The modification element preferably is coloured and/or is provided as a layer. The modification element preferably comprises or consist of a phosphor-containing material. In this case, if an optical indication device such as an LED emitting a light with a specific wavelength is used, said light excites the phosphor-containing modification element, whereby a modified wavelength, i.e. another color, is emitted. The modification element is preferably provided in the substrate. That is, the modification element such as coloured or phosphor containing particles or fibers could be added to the substrate, for example by adding them in the manufacturing of the dielectric substrate itself. Additionally or alternatively the modification element could at least partially cover the opening of the contact element. That is, it is likewise conceivable to arrange a modification element on the substrate, in particular at least partially within the opening in the contact element.

The electronic module preferably further comprises at least one security feature, and wherein the security feature preferably comprises or is constituted by the at least one opening. That is, the opening, in particular a shape of the opening, can be used to provide a security feature. For example, the opening could be provided as a specific a pattern or logo or drawing in the contact element so that a particular appearance is generated.

The electronic module can further comprise at least one visualization element, wherein the visualization element is configured to enhance a visualization of the indication signal to a user, and wherein the visualization element preferably comprises or consists of one or more alphanumeric characters and/or images. The visualization element is preferably arranged in proximity to an outlet region of the indication signal, e.g. the opening in the contact element through which the indication signal can reach out of the substrate, see above.

For example, in the event of two LEDs of different colors that are used to indicate the functionality of a payment transaction, two visualization elements in the form of the alphanumeric characters "+" and "-" could be used to further visualize the successful payment transaction (e.g. by means of the character "+") and the unsuccessful payment transaction (e.g. by means of the character "-").

The electronic module preferably further comprises at least one microprocessor and/or at least one microcontroller. The microprocessor preferably corresponds to a secure element chip, particularly preferably to the secure element chip constituting the integrated circuit chip the indication device is in communication with as mentioned initially. Additionally or alternatively the microcontroller is preferably in connection with or connected to the indication device, particularly preferably via one or more electrical connections such as electrical tracks and/or via the microcontroller as mentioned initially.

The electronic module can comprise further components as well as further connections among the module components as they are known in the art. For example, there could be one or more connections between the secure element chips and the ISO contact on the contact side of the electronic module. Additionally or alternatively there could be one or more connections between the secure element chips and an antenna. Additionally or alternatively there could be one or more connections between the secure element chip and the MCU microcontroller. Additionally or alternatively there could be one or more connections between the MCU microcontroller and a detection device such as a fingerprint sensor module. Additionally or alternatively there could be one or more connections between the secure element chips and some capacitors. Additionally or alternatively there could be some connections between the MCU microcontroller and some capacitors. Preferred connections of the secure element chip and the MCU microcontroller are provided by pads areas on the bonding side of the substrate by wire bonding process. The capacitors are preferably connected to the pads areas of the bonding side of the substrate by a soldering process or silver glue conductive material.

For instance, the detection device can be connected to the pads areas of the bonding side of the substrate by a soldering process or silver glue conductive material. One termination is in connection with a "VCC" (power supply of about 1mA) pad of the MCU and the other termination of the LED is in connection with a "GPIO open drain" which is a switch, "Ground" when the MCU wants the LED illuminates and is an open circuit when the MCU wants the LED not illuminates. In other words, the indication device preferably is in connection for one termination to a VCC of the MCU chip, wherein a preferred current is about 1 mA, and to the other termination to a "GPIO open drain", which is a switch, ground when the MCU wants the indication device to yield the indications signal and is an open circuit when the MCU wants the indication device to not yield any indication signal.

The electronic module preferably further comprises at least one encapsulation element, wherein said encapsulation element at least partially encapsulates any chips such as the secure element or the MCU microcontroller and/or wire bonding of these chips and/or any SMD components such as the capacitors or the indication device. It is however likewise conceivable that the encapsulation element encapsulates only a part of the SMD such as the capacitors, the indication device, etc. It is furthermore conceivable that the encapsulation element encapsulates the chips and wires and only part of the SMD components, etc. That is, various encapsulations are conceivable. The encapsulation element preferably is a protective resin as it is known in the art.

To this end it is conceivable to provide two or more encapsulations, for example an epoxy resin being dispensed or molded in order to encapsulate the chips and the wires of the electronic module and a black encapsulation encapsulating the indication device, in particular the light emitting diode. However, it is likewise conceivable that the encapsulations are the same.

The electronic module, in particular a processing unit being provided in the electronic module, is preferably configured to perform an enrolment operation generating enrolment data and/or to receive enrolment data. The electronic module, in particular the processing unit being provided in the electronic module, is preferably further configured to compare said enrolment data with new data, whereby the at least one state signal is generated based on an outcome of said comparison. The processing unit preferably comprises one or more chips with computational capabilities such as the secure element, an MCU, a microprocessor, a microcontroller, an IC, etc.

The processing unit is preferably further configured to store the enrolment data. The enrolment data and/or the new data preferably corresponds to biometric data such as a pattern of a person's face, a pattern of a person's iris, a pattern of ridges and valleys of a person's finger, sound waves of a person's voice, etc. that are detected by at least one detection device such as a sensor.

That is to say, the electronic module is preferably configured to perform an enrolment process as it is known in the art. In particular, the enrolment process is an exchange between different components having computational capabilities such as microprocessors MCU. During the enrolment the secure element sends a command to the MCU. The MCU sends then a command to a detection device such as a sensor. The MCU receives the pattern of the sensor. The MCU extracts the important points (reference template) and sends back the data to the secure element to say that the capture of the pattern 1 is finished. Then the process is done again for a pattern 2 etc. When the secure element has enough reference templates the enrolment is finished.

The electronic module preferably is an ISO 7816 module.

In another aspect, a data carrier comprising or consisting of at least one electronic module as described above is provided.

The data carrier preferably fulfils the ISO 7816 and/or the ISO/IEC 14443 standard.

The data carrier preferably comprises a card body, and wherein the electronic module is arranged at least partially in the card body. The card body preferably corresponds to a card body as it is known in the art. Hence, the card body can comprise one or more layers such as transparent layers, preferably plastic layers, particularly preferably thermoplastic layers such as polycarbonate (PC), polyvinyl chloride (PVC), amorphous polyester (A-PET), copolyester (PET-G) polyethylene terephthalate (PET), or biaxially-oriented polyethylene terephthalate (boPET) or ABS or ecological material from plant, cereal, nature or recycled materials. The card body preferably comprises at least one cavity, and wherein the at least one electronic module is arranged at least partially in said cavity. To this end it is particularly preferred that the electronic module, in particular its top side, is arranged flush with a top surface of the card body.

The data carrier preferably further comprises at least one detection device that is configured to detect at least one detection signal, wherein the at least one state signal and/or the at least one indication signal is based on said at least one detection signal.

That is, the data carrier preferably comprises at least one detection device that is in communication with the indication device, so that a state signal being retrieved from the detection signal can be communicated to the indication device. As explained above, the state signal is preferably retrieved from the detection signal in the processing unit. Hence, it is particularly preferred that the at least one detection device is in communication with the processing unit of the electronic module, and wherein the processing unit is furthermore in connection with the indication device. Furthermore, the enrolment data is preferably generated based on the detection signal.

Hence, the data carrier is preferably configured to perform a so-called enrolment phase and a matching phase. The following steps are preferably performed in the enrolment phase: i) detection of the detection signal, e.g. fingerprint acquisition, ii) a template creation based on the detected detection signal, preferably by the microprocessor such as the secure element, and iii) storage of the created template, preferably in the microprocessor such as the secure element. The following steps are preferably performed in the matching phase being performed anytime after an enrolment phase: iv) detection of the detection signal, e.g. fingerprint acquisition, v) a template creation based on the detection signal detected in step iv), preferably by the microprocessor such as the secure element, and vi) matching of the template created in step v) with the stored template of the enrolment phase.

The detection device preferably corresponds to a sensor, in particular to a sensor that is configured to sense biometric data such as a pattern of a person's face, a pattern of a person's iris, a pattern of ridges and valleys of a person's finger, sound waves of a person's voice, etc. To this end it is particularly preferred that the sensor corresponds to a fingerprint sensor. However, other types of sensors are likewise conceivable.

It should be noted that these explanations likewise apply to the case where at least one detection device is arranged on and/or in the electronic contact module according to the invention.

The data carrier preferably corresponds to a smart card, an identity card, a banking card or the like.

Hence, in this case the electronic module according to the invention can also be referred to as an electronic chip card module or an electronic smart card module.

In another aspect, a security document comprising or consisting of at least one data carrier as described above is provided. The security document preferably is a smart card, a banking payment card, an identity card, a passport, travel documents, or the like. For example, if the security document is a passport, the data carrier could be arranged in a page of the passport.

In another aspect a method of producing an electronic module, preferably the electronic module as described above, is provided. The method comprises the steps of i) providing at least one substrate, the substrate preferably being dielectric, and ii) providing at least one indication device. The indication device is configured to communicate with at least one integrated circuit chip. The indication device is configured to receive at least one state signal being indicative of at least one state. The indication device is further configured to yield at least one indication signal in response to the state signal, the at least one indication signal being indicative of the at least one state.

The individual processing steps preferably correspond to processing steps that are well-known in the art. For the sake of completeness, the preferred processing steps are briefly summarized below.

In a preferred step, one or more integrated circuit chips such as a secure element and/or a microcontroller MCU are die bonded onto a surface of the substrate, particularly preferably in reel generally with a non conductive glue or the like. In a further preferred step one or more components such as the indication device, in particular an optical indication device such as an LED, and/or one or more capacitors and/or one or more resistors are surface mounted on the surface of the substrate, preferably with solder paste or a low temperature solder paste or silver glue. In the case of the solder paste connection a cleaning step could be performed. Thereby, surface mounted components (SMD) are generated. In a further preferred step wire bonding connection between pads or the like on the one or more integrated circuit chips such as the secure element and the MCU chips are realized with metallic pad areas on the substrate. These chips can be also connected by a flip chip process as it is known in the art. In a further preferred step an encapsulation of the one or more integrated circuit chips and the wire bonding connection and possibly also of the SMD components is performed. In a further preferred step electrical test in reel of the electronic modules can be performed.

In another aspect, a method of producing a data carrier comprising at least one electronic module as described above is provided. Said method preferably comprises the step of embedding the electronic module by means of card manufacturing steps into a card body as they are known in the art. For example, in a preferred step an adhesive tape punching and lamination on the module reel are performed. In a further preferred step a punching or cutting of the electronic module to singulate them from the reel is performed. In a further preferred step a milling of a cavity in the card body is performed. In a further preferred step the cutted module is picked and placed in the cavity of the card body. It is furthermore preferred that a connection during the embedding between external contacts on the bonding side of the electronic module to some landing pads to connect the antenna and/or the detection device such as the sensor module is performed, particularly preferably by means of conductive material either dispensed on the card cavity or on the electronic module. The conductive material can be silver glue, solder paste, low temperature solder paste. The connection can be also done with an ACF (Anisotropic Conductive Film) preferably laminated on the substrate of electronic module. The landings pad preferably becomes apparent to connect with the electronic module after the cavity milling step of the card.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a: shows a top view on a data carrier comprising an electronic module, an indication device and a sensor according to the state of the art;
- Fig. 1b: shows a top view on a data carrier comprising an electronic module, an indication device and a sensor according to the invention;
- Fig. 2a: shows a bottom view on the electronic module according to figure 1a;
- Fig. 2b: shows a bottom view on the electronic module according to figure 1b;
- Fig. 3a: shows electrical interconnections tracks or wires in the data carrier from the electronic module to the sensor module and to an antenna and the indication device in the data carrier according to figure 1a;
- Fig. 3b: shows electrical interconnections tracks or wires in the data carrier from the electronic module to the sensor module and to an antenna according to figure 1b;
- Fig. 4: shows a bottom view on another electronic module according to the invention;
- Fig. 5: shows a sectional view of another electronic module according to the invention;
- Fig. 6: shows a sectional view of another electronic module according to the invention;
- Fig. 7: depicts a sectional view of another electronic module comprising an indication device according to the invention;
- Fig. 8: depicts a sectional view of another electronic module comprising an indication device according to the invention;
- Fig. 9: depicts a sectional view of another electronic module comprising an indication device according to the invention;
- Fig. 10: depicts a sectional view of another electronic module comprising an indication device according to the invention;
- Fig. 11: depicts a sectional view of another electronic module comprising an indication device according to the invention;
- Fig. 12: depicts a sectional view of another electronic module comprising an indication device according to the invention;
- Fig. 13: depicts a top view on another electronic module according to the invention;
- Fig. 14a: shows a top partial view on another electronic module according to the invention comprising two indication devices;
- Fig. 14b: shows a bottom partial view on the electronic module according to figure 14a;
- Fig. 15a: shows a top partial view on another electronic module according to the invention comprising two indication devices depicting a first state;
- Fig. 15b: shows a top partial view on the electronic module according to figure 8a, wherein the indication devices depict a second state;
- Fig. 15c: shows a top partial view on the electronic module according to figure 8a, wherein the indication devices depict a third state;
- Fig. 16a: shows a top partial view on another electronic module according to the invention, wherein the indication device is switched off;
- Fig. 16b: shows a top partial view on the electronic module according to figure 16a, wherein the indication device is switched on;
- Fig. 17: schematically illustrates conceivable processing steps for the manufacturing of an electronic module according to the invention;
- Fig. 18: shows a sectional view of a data carrier comprising an electronic module according to the invention;
- Fig. 19: shows a sectional view of another data carrier comprising an electronic module according to the invention.

### DESCRIPTION OF PREFERRED EMBODIMENTS

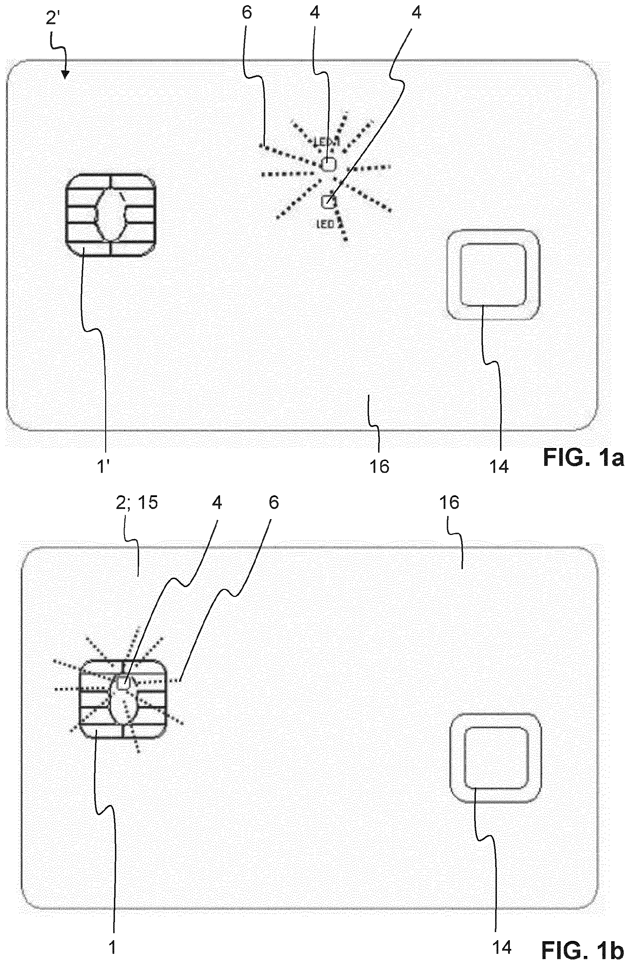

Figure 1a depicts a data carrier 2' in the form of a biometric dual interface smart card according to the state of the art. Said data carrier 2' comprises an electronic module 1', two indication devices 4 in the form of light emitting diodes (LEDs), and a sensor 14 in the form of a biometric fingerprint sensor module. A holder of the data carrier 2' can perform contactless payments by holding the data carrier 2', in particular the electronic module 1', above a contactless reader and after passing an authorization process by means of the biometric fingerprint sensor module 14. In fact, the holder has to place one of his fingers on the biometric fingerprint sensor module 14, and in the event of a successful authorization, the payment is executed. Said successful authorization and thus the successful payment is indicated to the holder by means of for example blinking, LEDs 6 or LEDs 6 emit continuous light.

Figure 1b depicts a data carrier 2 in the form of a biometric dual interface smart card 15 according to the present invention. Said data carrier 2 likewise comprises an electronic module 1, two indication devices 4 in the form of LEDs, and a sensor 14 in the form of a biometric fingerprint sensor. As becomes readily apparent from a comparison of figures 1a and 1b, in the data carrier 2 according to the invention, the LEDs 4 are arranged in the electronic module 1. This is in contrast to the data carrier 2' according to the state of the art, wherein the LEDs 4 are arranged outside of the electronic module 1' and within a card body 16 of the data carrier 2'.

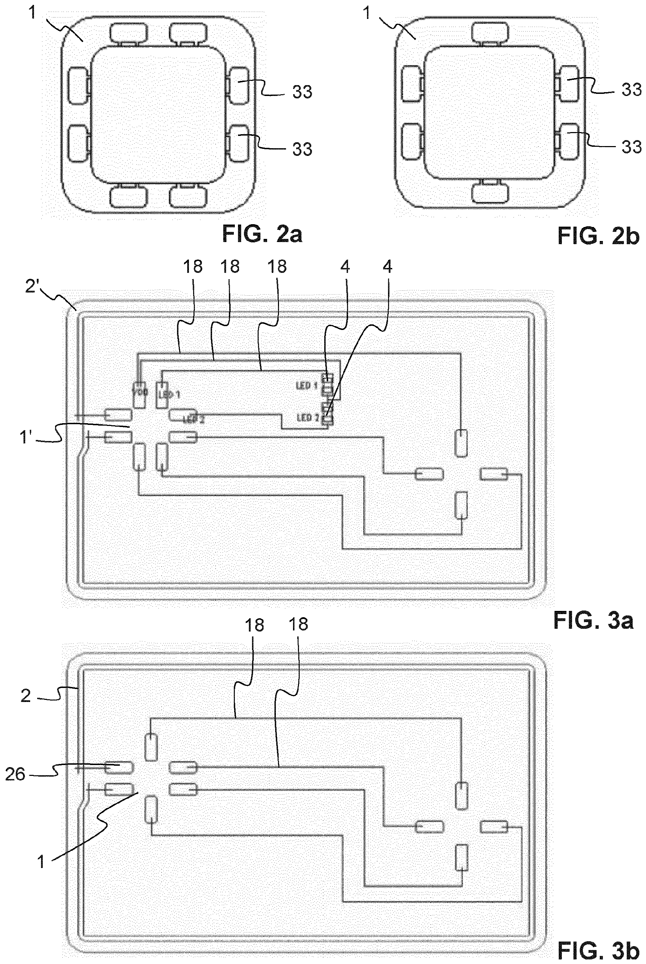

One of the advantages of the electronic module 1 according to the invention follows from figures 2a to 3b. Namely, whereas the data carrier 2' according to the state of the art requires eight external connections 33 in order to connect the two LEDs 4, see figures 2a and 3a, the data carrier 2 according to the invention requires only six external connections 33, see figures 2b and 3b. That is, the arrangement of the LEDs 4 in the electronic module 1 results in a less complex device.

Hence, from the above explanations it becomes apparent that the invention proposes a data carrier 2 such as biometric smart card 15 comprising an electronic module 1 such as a biometric ISO dual interface module (contact and contactless/radio frequency) with a preferably biometric authentication light indicator 4 inside this same electronic module 1.

In particular, and as will be explained in greater detail below, the invention proposes to mount an indication device 4 such as an LED diode inside the biometric smart card module 1, on the side of the chip 5 of a preferably biometric ISO module 1. The latter preferably corresponds to a secure element 5, and preferably further comprises an MCU 19, certain capacitors 20 and other discrete components. This electronic module 1 has the particularity of using a substrate 3 with contact elements 10 such as electrical contact pad metallizations, wherein said contact elements 10 comprise an opening 11 so that the light 6 is visible through the preferably transparent dielectric substrate film 3 when the fingerprint is recognized or not and/or if the payment transaction works or not. The LEDs 4 light up to provide important information to the user when attempting a payment transaction to facilitate the user experience. For example, when the payment transaction does not work, the LED 4 inside the electronic module 1 lights up (illuminates) for example red to warn the user that the transaction is not working, which means that the fingerprint sensor 14 on the card 15 did not recognize the finger presented or that the user did not put the finger on the fingerprint sensor 14. For example, if the fingerprint sensor 14 correctly recognizes the user's finger (authentication has been done) and the payment transaction is successful, a green LED inside the module may light up. For instance, a green light can be turned on when, during payment, the fingerprint stored in the secure element 5 of the ISO module 1 during enrolment has matched the fingerprint presented on the card's biometric sensor 14.

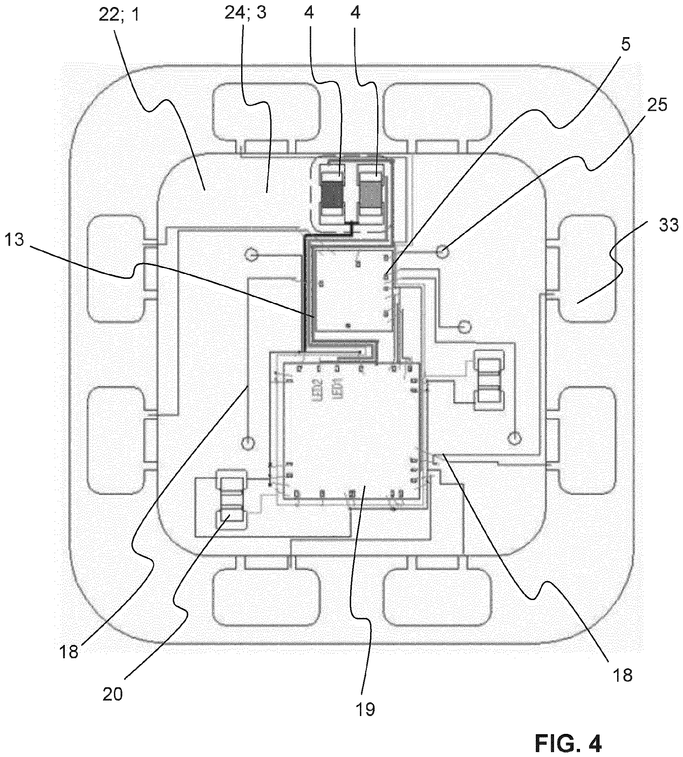

These and other aspects of the electronic modules 1 and data carriers 2 according to the invention will now be discussed in greater detail with respect to figures 4 to 19. All electronic modules 1 according to the invention have in common that they comprise at least one substrate 3 and at least one indication device 4 such as an LED. The indication device 4 is configured to communicate with at least one integrated circuit chip 5. The indication device 4 is configured to receive at least one state signal being indicative of at least one state. In the above example, said state signal is an authentication signal that indicates the existence or absence of an authentication of the card holder. The indication device 4 is further configured to yield at least one indication signal 6 such as light being emitted from the LED in response to the state signal. As such, the indication device 4 indicates the state, here the successful authorization, to the card holder.

A conceivable connection 18 of the various components of the electronic module 1 according to the invention is illustrate in figure 4. Figure 4 depicts a bottom side 22 of the electronic module 1. Here, two indication devices 4 in the form of two LEDs, an integrated circuit chip in the form of a secure element 5, a microprocessor chip or MCU 19, and capacitors 20 are provided. The secure element 5 is in connection with contact elements 10 being arranged on a top side 21 of the electronic module (not depicted). The secure element 5 is furthermore in connection with an antenna (not depicted). Moreover, the secure element 5 and the microprocessor chip 19 are in connection with each other. The microprocessor chip 19 is furthermore in connection with a detection device 14 such as a fingerprint sensor module (not depicted). In fact, the electronic module furthermore comprises external contacts 33 that are provided on the bonding side of the electronic module 1, and wherein the electronic module 1 is connected to the sensor module and to antennas via these external contacts. Additionally, there are connections 18 between the secure element 5 and the capacitors 20 as well as connections 18 between the microcontroller chip 19 and the capacitors 20. The connections 18 of these elements are well-known in the art. The secure element chip 5 and the microprocessor chip 19 constitute a processing unit 13 which is configured to perform an enrolment process as it is known in the art.

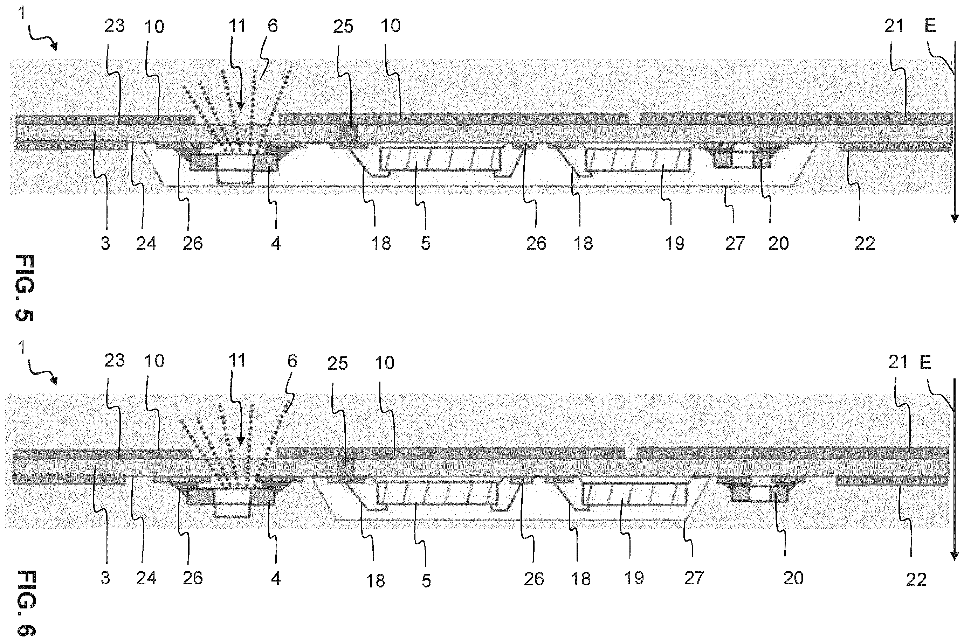

The structural design of the electronic module 1 according to the invention shall be illustrated by means of further figures. As best seen in figures 5 and 6, the substrate 3 corresponds to a film or layer and defines a top side 23 and an opposing bottom side 24. Furthermore, the substrate 3 is transparent and dielectric. Contact elements 10 in the form of ISO contacts are arranged on the top side 23 of the substrate 3. Several components such as the indication device 4 in the form of the LED, a secure element chip 5, a MCU chip 19 and a capacitor 20 are arranged on the bottom side 24 of the substrate 3. The top side 23 of the substrate 3, in particular the ISO contacts 10 on the top side 23 of the substrate 3, can be said to define a top side 21 or a contact side of the electronic module 1. The bottom side 24 of the substrate 3, in particular the components being arranged on the bottom side of the substrate, can be said to define a bottom side 22 or bonding side of the electronic module 1. The electronic module 1 defines an extension direction E that extends from the top side 21 of the electronic module 1 towards the bottom side 22 of the electronic module 1. In other words, said extension direction E extends from the contact side or the top side 21 of the electronic module 1 towards the bonding side or bottom side 22 of the electronic module 1. When seen along the extension direction E the indication device 4 is thus arranged after the substrate 3 with respect to the extension direction E. The integrated circuit chip 5, which is here provided by means of the secure element chip, is wire bonded by vias 25 in the substrate 3 that link metallic pads 26 provided on the bottom surface 24 of the substrate 3 with the contact elements 10 on the top surface 23 of the substrate 3. In addition, the microcontroller chip 19 is wire-bonded as well. Furthermore, all components, i.e. the LED 4, the secure element chip 5, the microcontroller chip 19 and the capacitor 20, are enclosed by an encapsulation 27. This is in contrast to the data carrier 1 depicted in figure 6, which differs from the data carrier 1 of figure 5 in that the encapsulation 27 encapsulates the secure element chip 5 and the microcontroller chip 19, however not the LED 4 and the capacitor 20.

When seen along the extension direction E the indication devices 4 are arranged after the contact elements 10. In other words, the contact elements 10 are arranged above the indication devices 4 and, as such, could block indication signals 6 yielded by the indication devices 4 towards the contact elements 10. In order to allow the indication signals 6 to reach outside, the contact elements 10 comprise openings 11 in the regions of the indication devices 4. In fact, the openings 11 and the indication devices 4 are arranged axial to each other. In other words, the opening 11 of the contact element 10 and the indication device 4 are arranged at a same location with respect to a direction extending perpendicularly to the extension direction E.

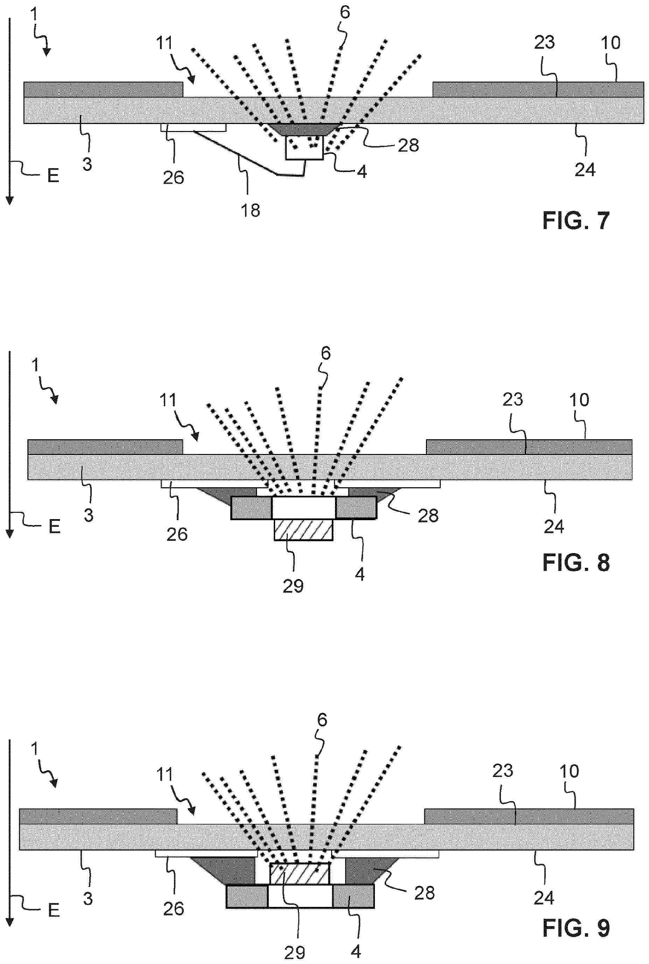

With respect to figures 7 to 9 different conceivable designs of the indication device 4 shall be discussed. In particular, figure 7 depicts an indication device 4 in the form of a LED chip that is attached to the bottom side 24 of the substrate 3 with a conductive die attach 28 such as silver glue. Furthermore, the LED chip 4 is in connection with a landing pad 26 being arranged on the bottom side 24 of the substrate 3 with wire bonding 18. Figures 8 and 9 depict an indication device 4 in the form of an LED 4 that is in each case provided as a surface mounted device. In particular, in both figures the LED 4 is attached to landing pads 26 being arranged on the bottom surface 24 of the substrate 3 with conductive material 28 such as solder paste or silver glue.

The indication devices 4 of figures 8 and 9 however differ in their mounting orientation. Namely, whereas figure 8 depicts an LED 4 that is arranged according to a standard mounting orientation, the LED 4 depicted in figure 9 is provided with a reverse mounting orientation. In the standard mounting orientation, the light emitting semi-conductor light source 29 of the LED 4 faces away from the bottom surface 24 of the substrate 3. In the reverse mounting orientation, the light emitting semi-conductor light source 29 of the LED 4 faces towards the bottom surface 24 of the substrate 3.

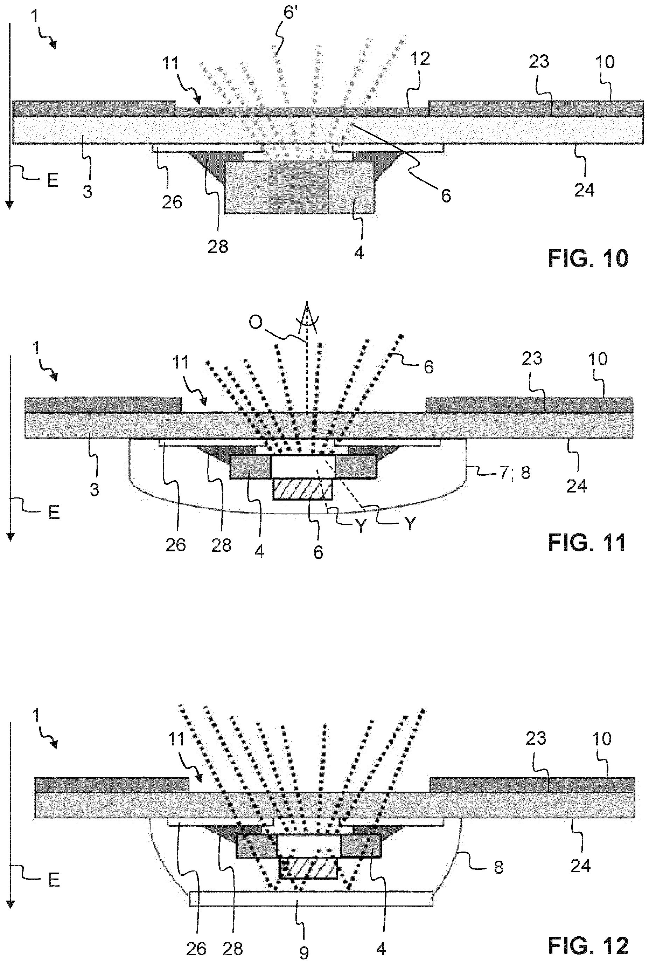

Figure 10 depicts an electronic module 1 which comprises a modification element 12 that covers the opening 11 in the contact element 10. The modification element 12 corresponds here to a coloured layer that is configured to modify the indication signal 6 in the form of light yielded by the indication device in the form of the LED 4. In this case, the modification element 12 will change a wavelength of the incoming light 6, such that light 6' of a different wavelength will be emitted from the modification element 12 towards an outside.

Figure 11 depicts an electronic module 1 which comprises an absorption element 7 or diffusive element 8, wherein the absorption element 7 is configured to at least partially absorb one or more parts of the indication signal 6 yielded along one or more yielding directions Y that are different from an observation direction O under which an observer observes the electronic module 1 and/or wherein the diffusive element 8 is configured to diffuse the indication signal 6. That is to say, the absorption element 7 is arranged and configured such that it at least partially absorbs those parts of the indication signal 6 that are yielded along an unwanted direction. Here, since the indication device is a LED 4 and the indication signal is light 6, the absorption element 7 absorbs light 6 being emitted in directions that are different from the observation direction O along which the user observes the electronic module 1. As a consequence, those parts of the indication signal 6 that are yielded along the wanted direction, here along the observation direction O or essentially along the observation direction O, is enhanced or concentrated. In the depicted embodiment the absorption element 7 is arranged on the bonding side 22 of the electronic module 1, i.e. in the region of the bottom side 24 of the substrate 3, and corresponds to a black encapsulation that encapsulates the indication device 4. The diffusive element 8 results in a visual effect for the observer being a diffused light appearing in the whole surface of the opening 11 and even also on the intercontact between contacts 10, which are here also provided in the form of some openings. The diffusive element could be provided as a UV transparent encapsulation resin, for example.

Figure 12 depicts an electronic module 1 which comprises a reflection element 9 in the form of a mirror or a reflecting plate that is arranged after the indication device 4 with respect to the extension direction E. The reflection element 9 is configured to guide the indication signal 6 along one or more desired directions, here along directions extending essentially opposite to the extension direction E and essentially along the observation direction O towards the outside. The electronic module of figure 12 furthermore comprises a diffusive element 8 that is configured to diffuse the indication signal 6. Here, the diffusive element 8 corresponds to a UV transparent encapsulation that encapsulates the LED. The reflection element 9 is arranged after the diffusive element 8 with respect to the extension direction E and is sticked on and by the resin forming the encapsulation 8.

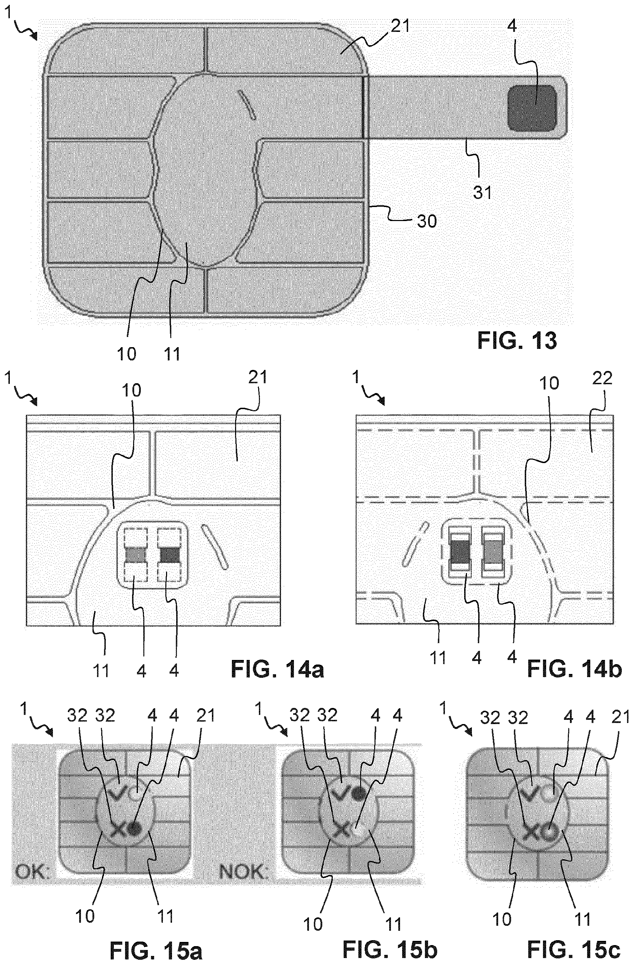

The electronic module 1 can be said to define a standard area 30. In figure 13, said standard area 30 is of a square shape with rounded corners. Here, the electronic module 1 furthermore comprises a protuberance or extension 31 that laterally extends from the standard area 30. The indication device 4 is arranged in said protuberance or extension 31.

Figures 14a and 14b depict a partial top view and a partial bottom view of an electronic module 1 comprising two indication devices 4 in the form of two LEDs. Both LEDs 4 are arranged below the opening 11 in the contact elements 10 such that their emitted light 6 is visible from an outside. Moreover, in the present case said two LEDs 4 are configured to emit light 6 of different wavelengths. For example, one LED 4 is configured to emit green light 6 and the other LED 4 is configured to emit red light 6. The electronic module 1 is configured such, that a particular LED 4 is emitting its light 6 in the case of a particular state. For example, if the electronic module 1 is configured to payment transactions, one of the LED 4 could be assigned to the state of a successful payment transaction and the other LED 4 could be assigned to the state of an unsuccessful payment transaction. The differently coloured lights 6 will readily inform the user on the outcome of the payment transaction.

Figures 15a to 15c depict an electronic module 1 that comprises two indication devices 4 as well as two visualization elements 32. The visualization elements 32 are configured or intended to visualize a state. The indication devices 4 here again correspond to LEDs. Each LED 4 is assigned to one visualization element 32, wherein one of which corresponds to an image depicting a check mark that is used to visualize a successful payment, an "OK", and the other visualization element 32 corresponds to the character "x" that is used to visualize an unsuccessful payment, a "NOK". In figures 15a and 15b the two LEDs 4 are of the same colour, wherein the state becomes readily apparent by the particular LED 4 emitting light next to its assigned visualization element 32. Figure 15c depicts a case where the two LEDs 4 are of a different colour as has been discussed with reference to figures 14a and 14b.

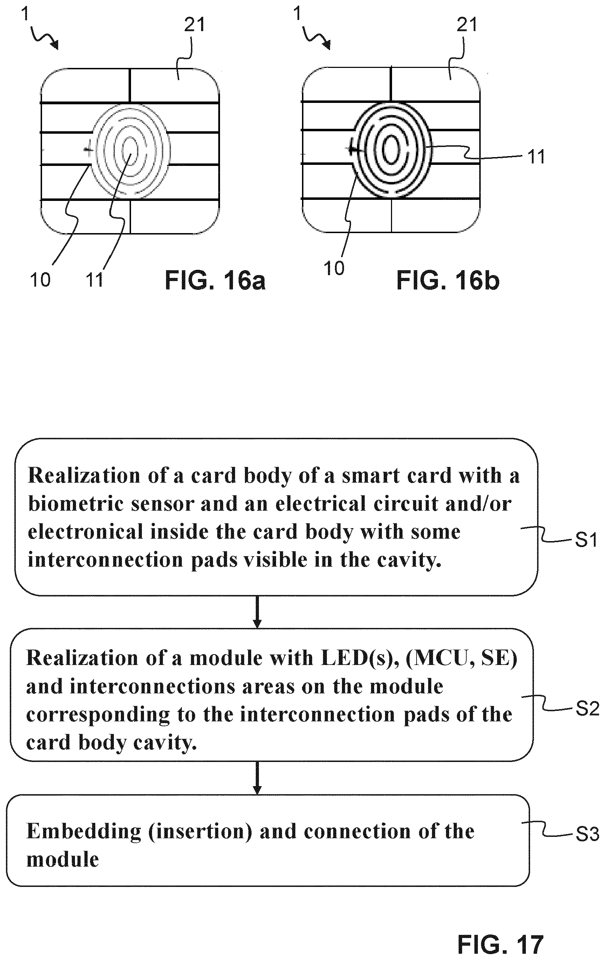

Figures 16a and 16b depict a top view on an electronic module 1, wherein the contact elements 10 comprising openings 11 are visible. As is readily apparent from these figures, the openings 11 can be provided as patterns, here as patterns in the form of ellipses. Here, the indication device 4 corresponds to an LED, wherein figure 16a depicts a state where the LED 4 is switched off, and wherein figure 16b depicts the state where the LED 4 is switched on, respectively.

Figure 17 illustrates conceivable processing steps that are performed when a data carrier comprising an electronic module according to the invention is manufactured. That is, in a first step S1 a card body of a smart card with a biometric sensor and an electrical circuit and/or electronical inside the card body with some interconnection pads visible in the cavity is realized. In a second step S2 an electronic module with LED(s), (MCU, SE) and interconnections areas on the electronic module corresponding to the interconnection pads of the card body cavity is realized. In a third step, an embedding (insertion) and connection of the electronic module is performed.

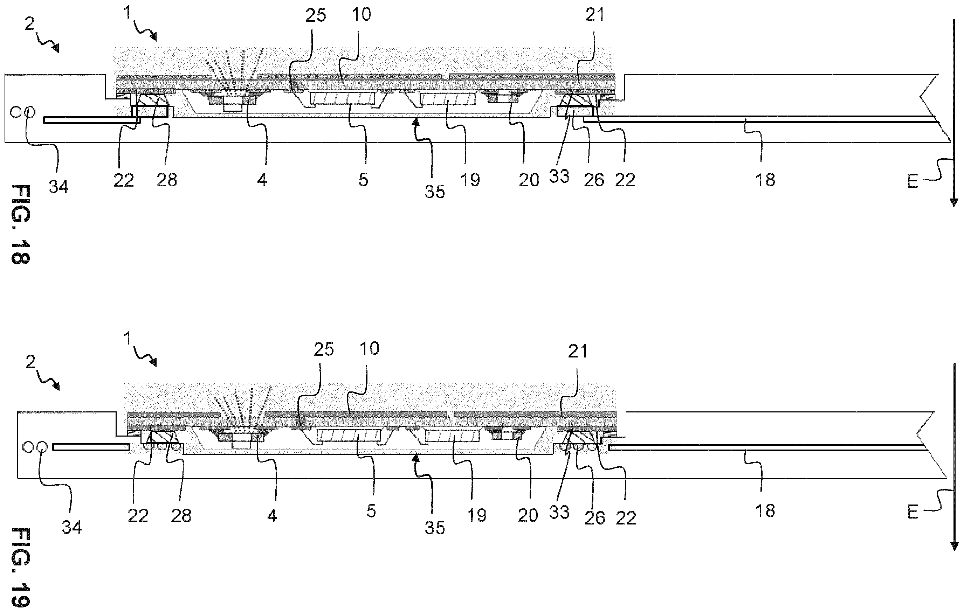

Figures 18 and 19 depict conceivable embeddings and connections of an electronic module 1 in a data carrier 2. In fact, these figures depict the connection during the embedding between external contacts on the bonding side of the electronic module 1 to some landing pads 26 to connect one or more antennas 34 and/or a detection device such as the sensor module with conductive material 28 either dispensed on a card cavity 35 or on the electronic module 1. The conductive material 28 can be silver glue, solder paste, low temperature solder paste. The connection can be also done with an ACF (Anisotropic Conductive Film) laminated on the substrate 3 of the electronic module 1 and/or the contact 33 on the bonding side of the electronic module. The landings pads 26 become apparent to connect with the electronic module 1 after the cavity milling step of the data carrier 2. To this end figure 18 shows the electronic module 1 being embedded and connected in the data carrier 2 with landing pads 26 having a plate shape. Figure 19 shows the electronic module 1 being embedded and connected in the data carrier 2 with landing pads 26 done by a wire embedding process. Regarding the further components of the electronic module 1 reference is made to figures 5 and 6 and the corresponding description provided above.

### LIST OF REFERENCE SIGNS

| | | | |
|---|---|---|---|
| 1, 1' | electronic module | 35 | cavity |
| 2, 2' | data carrier | | |
| 3 | substrate | E | extension direction |
| 4 | indication device | Y | yielding direction |
| 5 | integrated circuit chip | O | observation direction |
| 6, 6' | indication signal | S1-S3 | processing steps |
| 7 | absorption element | | |
| 8 | diffusive element | | |
| 9 | reflection element | | |
| 10 | contact element | | |
| 11 | opening | | |
| 12 | modification element | | |
| 13 | processing unit | | |
| 14 | detection device | | |
| 15 | security document | | |
| 16 | card body | | |
| 18 | connection | | |
| 19 | microcontroller chip | | |
| 20 | capacitor | | |
| 21 | top side of electronic module | | |
| 22 | bottom side of electronic module | | |
| 23 | top side of substrate | | |
| 24 | bottom side of substrate | | |
| 25 | vias | | |
| 26 | pads | | |
| 27 | encapsulation | | |
| 28 | conductive material | | |
| 29 | light source | | |
| 30 | standard area | | |
| 31 | protuberance | | |
| 32 | visualization element | | |
| 33 | external contact | | |
| 34 | antenna | | |

## Claims

1. An electronic module (1) for a data carrier (2) defining an extension direction (E) and comprising:
- at least one substrate (3), the substrate (3) preferably being dielectric; and
- at least one indication device (4),
wherein the indication device (4) is configured to communicate with at least one integrated circuit chip (5),
wherein the indication device (4) is configured to receive at least one state signal being indicative of at least one state, and
wherein the indication device (4) is further configured to yield at least one indication signal (6) in response to the state signal, the at least one indication signal (6) being indicative of the at least one state.

2. The electronic module (1) according to claim 1, wherein the indication device (4) is an optical device and the indication signal (6) is an optical signal, the indication device (4) preferably being a light emitting diode, and/or
wherein the indication device (4) is an acoustic device and the indication signal is an acoustic signal, and/or
wherein the indication device (4) is a haptic device and the indication signal is a haptic signal.

3. The electronic module (1) according to any one of the preceding claims, wherein the state signal is an authentication signal that indicates the existence or absence of an authentication, preferably an authentication of a user of the electronic module (1) and particularly preferably a biometric authentication of the user, and/or
wherein the state signal is an operating signal that indicates a correct or incorrect operation, preferably a correct or incorrect operation of the electronic module (1) by a user of the electronic module (1), and/or
wherein the state signal is a function signal that indicates the existence or absence of a functionality, preferably a functionality of the electronic module (1) and/or a functionality of a procedure initiated or executed by the electronic module (1) such as a payment and/or a functionality of another device being in connection with the electronic module (1).

4. The electronic module (1) according to any one of the preceding claims, wherein the indication device (4) is arranged after the substrate (3) with respect to the extension direction (E), or
wherein the indication device (4) is comprised in the substrate (3).

5. The electronic module (1) according to any one of the preceding claims, further comprising at least one absorption element (7), wherein the absorption element (7) is configured to at least partially absorb one or more parts of the indication signal (6) yielded along one or more yielding directions (Y) that are different from an observation direction (O) under which an observer observes the electronic module (1), and
wherein the absorption element (7) is preferably arranged after the indication device (4) with respect to the extension direction (E) and/or at least partially around the indication device (4), and/or
wherein the absorption element (7) preferably comprises or consists of a black encapsulation and/or a black plastics.

6. The electronic module (1) according to any one of the preceding claims, further comprising at least one diffusive element (8) that is arranged before the indication device (4) and/or after the indication device (4) with respect to the extension direction (E) and/or at least partially around the indication device (4),
wherein the diffusive element (8) is configured to diffuse the indication signal (6), and
wherein the diffusive element (8) preferably comprises or consists of a UV transparent encapsulation.

7. The electronic module (1) according to any one of the preceding claims, further comprising at least one reflection element (9) such as a mirror or a white plate that is arranged before and/or after the indication device (4) with respect to the extension direction (E) and that is configured to guide the indication signal (6) along one or more directions extending preferably opposite or essentially opposite to the extension direction (E).

8. The electronic module (1) according to any one of the preceding claims, further comprising at least one contact element (10) being configured to establish a contact with an external contacting device, and
wherein the contact element (10) is preferably arranged before the substrate (3) and/or before the indication device (4) with respect to the extension direction (E).

9. The electronic module (1) according to claim 8, wherein the contact element (10) delimits or comprises at least one opening (11), and wherein the opening (11) enables a passage of the indication signal (6) yielded by the indication device (4), the opening (11) preferably being produced by etching into the contact element (10).

10. The electronic module (1) according to any one of the preceding claims further comprising at least one modification element (12), and wherein the modification element (12) is configured to modify the indication signal (6) yielded by the indication device (4),
wherein the modification element (12) preferably is coloured and/or is provided as a layer, and/or
wherein the modification element is preferably provided in the substrate, and/or
wherein the modification element preferably at least partially covers the opening (11).

11. The electronic module (1) according to any one of the preceding claims, wherein the electronic module (1), in particular a processing unit (13), being provided in the electronic module (1), is configured to perform an enrolment operation generating enrolment data and/or to receive enrolment data,
wherein the electronic module (1), in particular a processing unit (13), being provided in the electronic module (1), is further configured to compare said enrolment data with new data, whereby the at least one state signal is generated based on an outcome of said comparison.

12. A data carrier (2) comprising or consisting of at least one electronic module (1) according to any one of the preceding claims.

13. The data carrier (2) according to claim 12, further comprising at least one detection device (14) that is configured to detect at least one detection signal, wherein the at least one state signal and/or the at least one indication signal (6) is based on said at least one detection signal, and
wherein the detection device (14) preferably corresponds to a sensor such as a fingerprint sensor, and/or
wherein the enrolment data is preferably generated based on the detection signal.

14. A security document (15) comprising or consisting of at least one data carrier (2) according to claim 12 or 13, the security document preferably being a smart card, a banking payment card, an identity card, a passport or the like.

15. A method of producing an electronic module (1), preferably the electronic module (1) according to any one of claims 1 to 11, the method comprising the steps of:
- Providing at least one substrate (3), the substrate (3) being dielectric; and
- Providing at least one indication device (4),
wherein the indication device (4) is configured to communicate with at least one integrated circuit chip (5),
wherein the indication device (4) is configured to receive at least one state signal being indicative of at least one state, and
wherein the indication device (4) is further configured to yield at least one indication signal (6) in response to the state signal, the at least one indication signal (6) being indicative of the at least one state.
